(19) Europäisches Patentamt
European Patent Office
Office européen des brevets

(11) **EP 4 224 785 B1**

(12) **EUROPEAN PATENT SPECIFICATION**

(45) Date of publication and mention
of the grant of the patent:
**20.11.2024 Bulletin 2024/47**

(21) Application number: **22305122.8**

(22) Date of filing: **03.02.2022**

(51) International Patent Classification (IPC):
**H04L 9/32** $^{(2006.01)}$

(52) Cooperative Patent Classification (CPC):
**H04L 9/3247**

(54) **LATTICE-BASED CRYPTOGRAPHIC DIGITAL SIGNATURE SCHEME UTILISING MASKING**

KRYPTOGRAPHISCHES DIGITALES SIGNATURSCHEMA AUF GITTERBASIS UNTER
VERWENDUNG EINER MASKIERUNG

SCHÉMA DE SIGNATURE NUMÉRIQUE CRYPTOGRAPHIQUE FONDÉ SUR UN RÉSEAU
UTILISANT LE MASQUAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.08.2023 Bulletin 2023/32**

(73) Proprietor: **PQShield Limited
Oxford, Oxfordshire OX2 7HT (GB)**

(72) Inventors:
 • **DEL PINO, Rafaël
 Paris, 75001 (FR)**
 • **PREST, Thomas
 Paris, 75001 (FR)**

(74) Representative: **EIP
Fairfax House
15 Fulwood Place
London WC1V 6HU (GB)**

(56) References cited:
 • **MICHEL ABDALLA ET AL: "From Identification to
 Signatures via the Fiat-Shamir Transform:
 Minimizing Assumptions for Security and
 Forward-Security", IACR, INTERNATIONAL
 ASSOCIATION FOR CRYPTOLOGIC RESEARCH,
 vol. 20070519:033816, 19 May 2007 (2007-05-19),
 pages 1 - 29, XP061000471**
 • **NABIL ALKEILANI ALKADRI ET AL: "On
 Lattice-Based Interactive Protocols with Aborts",
 vol. 20200228:195934, 28 February 2020
 (2020-02-28), pages 1 - 24, XP061035399,
 Retrieved from the Internet
 <URL:http://eprint.iacr.org/2020/007.pdf>
 [retrieved on 20200228]**
 • **ROSSI M&#233;LISSA: "Extended Security of
 Lattice-Based Cryptography", 10 September
 2020 (2020-09-10), pages 1 - 205, XP055823016,
 Retrieved from the Internet
 <URL:https://hal.archives-ouvertes.fr/tel-029463
 99/document> [retrieved on 20210709]**

**Description**

Technical Field

The present invention relates to a cryptographic digital signature scheme to verify the integrity and origin of an electronic message. The invention has relevance to a post-quantum lattice-based cryptographic digital signature scheme utilising masking as a countermeasure to side channel attacks.

Background

A digital signature scheme enables a signer to attach a digital signature to a message so that a verifier can verify that the message is identical to the message as signed by the signer. A digital signature scheme generally involves three operations: key generation, signing and verifying. In the key generation operation, a signing key sk and a verification key vk are generated. The signing key sk is private to the signer, while the verification key vk may be public and is known to the verifier. In the signing operation, the signer generates a digital signature for a message. In the verifying operation, the verifier verifies the message using the digital signature and the verification key vk.

The Fiat-Shamir transform (or heuristic) is a methodology that turns an identification scheme into a signature scheme via a generic transform. Signatures that are derived from this methodology are called Fiat-Shamir signatures. A three-pass identification scheme involves i) a prover making a commitment available to a verifier, ii) the verifier sending a challenge to the prover, and iii) the prover sending a response to the challenge to the verifier and the verifier processing the response to confirm that the prover knows a private key without the verifier gaining any knowledge of the private key. A corresponding digital signature scheme involves the signer generating the challenge by applying a hash function to data comprising a commitment, a verification key and the message being signed, and forms a digital signature comprising the commitment and the response. Based on the message, the digital signature and the verification key, the verifier can recreate the challenge and verify the response, thereby verifying the integrity of the message.

Lattice-based cryptographic schemes, such as those based on learning with errors (LWE) and short integer solution (SIS) problems, are of interest because lattice-based cryptographic schemes are conjectured to be resistant to attacks by attackers having access to a large-scale quantum computer. Accordingly, lattice-based cryptographic schemes are typically considered to be a subset of post-quantum cryptography.

Lattice-based cryptographic schemes may be vulnerable to side-channel attacks in which an adversary learns side-channel information about the physical execution of an algorithm. The side-channel information may be derived from many sources such as running time, electromagnetic emissions, energy consumption and acoustic emissions. Various studies have demonstrated that side-channel information about the execution of lattice-based signing algorithms may allow an adversary to recover the signing key sk that was used.

One countermeasure that has been proposed against side-channel attacks is masking, which relies upon techniques in the fields of secret sharing and multi-party computation (MPC). Given a sensitive value $x \in \mathbb{Z}_q$, masking x consists of representing x as a tuple $(x_1, \ldots, x_d) \in \mathbb{Z}_q^d$, where $d$ is the number of shares (also referred to as the sharing order) and in the context of masking $d\text{-}1$ is often called the masking order, such that (i) $\Sigma_{i=1}^{d} x_i = x$ mod q and (ii) any subset of $t < d$ distinct $x_i$'s looks uniformly random. This tuple may be represented by the notation $[\![x]\!]_d$ or $[\![x]\!]$ when $d$ is clear in context. The rationale of masking is that an attacker with the ability of learning the value of $t < d$ variables $x_i$ will learn nothing about x.

Increasing the value of $d$ strengthens the countermeasure against side-channel attacks, but a challenging aspect of masking is that increasing the value of $d$ often results in the computational complexity scaling with quadratic (or higher) overhead.

Summary

According to a first aspect of the present invention, there is provided computer-implemented method for generating a signature keypair for a Fiat-Shamir digital signature. The method comprises generating a public matrix by sampling a modulo q base ring and generating a plurality of secret shares of a secret, each secret share being generated by sampling the modulo q base ring. For each secret share, the product of the secret share and the matrix is determined to generate a modified secret share and the modified secret shares are rounded at modulo p, where $p \neq q$, to generate a plurality of rounded secret shares, which are decoded to generate solution data. A signing key corresponding to the plurality of secret shares and a verification key corresponding to the public matrix and the solution data can then be returned. When the sampling of the secret shares from the modulo q base ring is unconstrained (i.e. uniform secret LWE), the signing key and the verification key can be provided in such a way the processing complexity scales linearly with the number $d$ of the plurality of secret shares. If the secret is constrained to be short (i.e. small secret LWE), the key generation time becomes quadratic in $d$.

According to a second aspect of the invention, there is provided a computer-implemented method for generating a Fiat-Shamir digital signature in accordance with a signing key and a verification key, in which the signing key corresponds to a plurality of secret shares of a secret where each secret share is sampled from a modulo q base ring and the verification key corresponds to a public matrix sampled from the modulo q base ring and solution data. The method comprises generating a plurality of random shares, each random share being generated by sampling a plurality of parameters from the modulo q base ring, and for each random share, determining the product of the random share and the public matrix to generate a plurality of modified random shares. Each modified random share is rounded at modulo $p$, where $p \neq q$, to generate a plurality of rounded random shares, and then the plurality of rounded random shares are decoded to generate commitment data. A Hash function is then applied to data comprising the message and the commitment data to generate challenge value $c$, and a plurality of response shares is generated by, for each secret share, multiplying the respective secret share by the challenge value $c$ and adding a respective random share and the plurality of response shares are decoded to generate response data. The difference between the product of the response data and the public matrix and the product of the challenge value $c$ and the solution data is calculated to provide test data, and hint data is determined by modulo p rounding the test data to generate rounded test data and determining the difference between the response data and the rounded test vector. A digital signature comprising the response data and the hint data can then be returned. In this way, the digital signature can be provided in such a way the processing complexity scales quasilinearly with the number $d$ of the plurality of secret shares, regardless of whether the sampling of the random shares is unconstrained or constrained to be small.

According to a third aspect of the invention, there is provided a computer-implemented method of verifying a message using an associated Fiat-Shamir digital signature, comprising response data and hint data, in accordance with a signing key and a verification key, in which the signing key corresponds to a plurality of secret shares of a secret where each secret share is sampled from a modulo q base ring and the verification key corresponds to a public matrix sampled from the modulo q base ring and solution data derived using the public matrix and the plurality of secret shares. A Hash function is applied to data comprising the message and commitment data to generate challenge value $c$. The difference between the product of the response data and the public matrix and the product of the challenge value c and the solution data is calculated to provide test data, and the test data is rounded at modulo p to provide rounded test data. It is then verified that the sum of the rounded test data and the hint data corresponds to the commitment data.

Further features and advantages of the invention will become apparent from the following description of preferred embodiments of the invention, given by way of example only, which is made with reference to the accompanying drawings.

## Brief Description of the Drawings

Figure 1 schematically shows the main components of an example of an electronic messaging system employing a digital signature scheme.
Figure 2 schematically shows the main components of a device capable of performing key generation, signing and verification operations.

## Detailed Description

Examples described herein relate to electronic messaging systems in which a signer generates a digital signature for an electronic message and a verifier verifies the electronic message using the digital signature.

*System Overview*

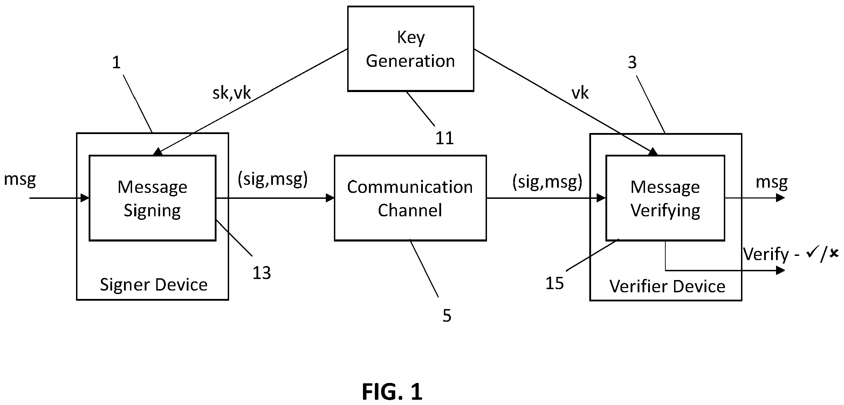

As shown in Figure 1, an electronic messaging system includes a signer device 1 which sends a signed message *(sig,msg)* to a verifier device 3 vis a communication channel 5.

The signer device 1 is a processing device having a transmitter (not shown in Figure 1) to transmit the signed message *(sig,msg)* into the communication channel 5. For example, the signer device 1 may be a server computer, a desktop computer, a laptop computer, a tablet device or a smartphone. While figure 1 shows the signer device 1 receiving an unsigned message *msg,* alternatively the unsigned message *msg* may be generated by the signer device 1.

Similarly, the verifier device 3 is a processing device having a receiver (not shown in Figure 1) to receive a signed message *(sig,msg)* from the communication channel 5. For example, the verifier device 3 may be a server computer, a desktop computer, a laptop computer, a tablet device or a smartphone. While figure 1 shows the verifier device 3 outputting an unsigned message *msg,* alternatively the unsigned message *msg* may be processed by the verifier device 3.

The communication channel 5 may communicate electronic messages over a communication network such as a local area network (LAN), wide area network (WAN), public land mobile network (PLMN), system area network (SAN) or the like. The communication channel 5 may involve the signer device 1 storing the message *msg* in memory for subsequent retrieval by the verifier device 3.

The electronic messaging system of Figure 1 has a key generation circuit 11 that generates a signature keypair comprising a signing key sk and a verification key vk. Both the signing key sk and the verification key vk are provided to the signer device 1, but only the verification key vk, not the signing key sk, is provided to the verifier device 3. Although the key generation circuit 11 is shown external to the signer device 1 in Figure 1, it will be appreciated that the key generation circuit 11 may be provided in the signer device 1, with the signer device 1 communicating the verification key vk to the verifier device 3, for example via the communication channel 5.

The signer device 1 includes a message signing circuit 13 which receives the unsigned message *msg* and outputs the signed message *(sig,msg).*

The verifier device 3 includes a message verifying circuit 15 which receives the signed message *(sig,msg)* and outputs the unsigned message *msg* and an indication whether or not the content of the unsigned message *msg* has been verified.

The key generation circuit 11, the message signing circuit 13 and the message verifying circuit 15 may be embodied in hardware, software or a combination of hardware and software. For example, one or more of the key generation circuit 11, the message signing circuit 13 and the message verifying circuit 15 may comprise a cryptographic coprocessor that accelerates cryptographic operations in a System-on-Chip (SoC) environment on a Field Programmable Gate Array (FPGA) or an Application Specific Integrated Circuit (ASIC).

An example of the operations performed by the key generation circuit 11, the message signing circuit 13 and the message verifying circuit 15 will now be described in detail. In this discussion, the following notation will be used:

- a vector will be represented in lowercase bold font (e.g. t);
- a Matrix will be represented in uppercase bold font (e.g. A);
- $\mathcal{R}_q$ is the base ring, which is commutative: it may for example be a quotient ring of the form $\mathbb{Z}_q[x]/(x^n + 1)$, where $\mathbb{Z}_q = \mathbb{Z}/q\mathbb{Z}$ is the ring of integers modulo q;
- the notation $x \leftarrow S$ means that x is sampled uniformly at random from the set S;
- given

$$x \in \mathbb{Z}_q, \; \lfloor x \rceil_p = \lfloor x/p \rceil,$$

which is referred to as a modulus rounding operation (by coefficient-wise application, this operation can be extended to elements of $R_q$ and vectors over $R_q$);

*Key Generation*

The manner in which the key generation circuit 11 generates a signature keypair may be represented by the following pseudocode:

```
Require: ∅
Ensure: A signature keypair (⟦sk⟧, vk), where ⟦sk⟧ is an order-d sharing of sk
    1: A ← 𝓡_q^{k×ℓ}
    2: ⟦s⟧ ← (𝓡_q^ℓ)^d
    3: ⟦t⟧ ← A · ⟦s⟧
    4: ⟦t⟧ ← OrderSwitch_{d→d'}(⟦t⟧)
    5: ⟦t⟧ ← ApproxRound(⟦t⟧)
    6: t := Decode(⟦t⟧)
    7: return (⟦sk⟧ := ⟦s⟧, vk := (A, t))
```

In line 1, a $k \times l$ matrix **A** is sampled from the base ring $\mathcal{R}_q$.

In line 2, $d$ $l$-dimensional vectors are sampled from the base ring $\mathcal{R}_q$ to generate an order-d sharing [s] of a secret s. Since the secret s is uniform in $\mathcal{R}_q^l$, the secret s can be generated in a masked manner securely and efficiently by sampling each share uniformly and independently.

In line 3, each of the $d$ shares [s] of the secret **s** is multiplied by the matrix **A** to generate $d$ shares $⟦t⟧$ of a vector **t**. Contrary to conventional LWE lattice cryptography schemes, there is no sampled error term in line 3 of the pseudocode. Sampling such an error term in a masked manner would be computationally expensive. Accordingly, as will be described hereafter, an alternative approach is adopted to introducing a deliberate error into the vector **t**.

In line 4, a function, also called a gadget, that is referred to as OrderSwitch is applied to the vector **t** to transform the order-d sharing of **t** into an order-$d'$ sharing of **t**, where $d' \geq d$. Pseudocode for the OrderSwitch gadget is set out below for converting $d$ shares of a value $x$ into $d'$ shares of the value $x$.

```
Require: An order-d sharing ⟦x⟧_d of a value x, a value d' ≥ d
Ensure: An order-d' sharing y = ⟦x⟧_{d'} of a value x
    1: y = (y_i)_{i∈[d']} := (0)_{i∈[d']}
    2: for i ∈ [d] do
    3:     y_i := x_i
    4: y ← Refresh_{d'}(y)
    5: return y
```

It will be seen that in effect a number $d'-d$ null vectors are added and to generate $d'$ shares, and then a Refresh operation is performed to generate $d'$ new shares for $x$. The Refresh operation can be performed in time $O(d)$ (see, for example, the article entitled "Provably secure higher-order masking of AES" by Rivain and Prouff in CHES 2010, volume 6225 of LNCS, pages 413-427, Springer, Heidelberg, August 2010), but for stronger security Refresh operations in time $O(d \log d)$ (see, for example, the article entitled "Horizontal side-channel attacks and countermeasures on the ISW masking scheme" by Battistello et al in CHES 2016, volume 9813 of LNCS, pages 23-39, Springer, Heidelberg, August 2016) may be performed instead of or in addition to Refresh operations in time $O(d)$. By coefficient-wise application, OrderSwitch can be trivially generalised to vectors, such as the shares of t, as well as polynomials and matrices.

The purpose of the order switching in line 4 of the key generation pseudocode is to act as a countermeasure to the shares of **t** being probed by an adversary before an error term is introduced.

Line 5 of the key generation pseudocode effectively introduces an error term using a gadget that is referred to as ApproxRound. Pseudocode for the ApproxRound gadget for an order-d sharing value x is set out below.

```
Require: An order-d sharing ⟦x⟧ = (x_i)_{i∈[d]} of a value x
Ensure: An order-d sharing ⟦y⟧ of a value y ∈ ℤ_p such that |y - ⌊x⌋_p| ≤ d
    1: return (⌊x_i⌋_p)_{i∈[d]}
```

It will be seen that each share of the value x is modulo $p$ rounded, where $p \neq q$, which in this example involves each co-efficient of each share of the value x being input to the function round(x/p), where round () denotes a rounding operation that maps a floating point value to the nearest integer. The gadget ApproxRound has the effect that the decoded value x is only correct up to an additive term upper- and lower-bounded by $\pm d$. By coefficient-wise application, ApproxRound can be trivially generalised to vectors, such as the shares of **t**, as well as polynomials and matrices.

Returning to the key generation pseudocode, at line 6 the vector t is decided from the order-$d$ sharing following the application of the ApproxRound gadget. Finally, at line 7, the key generation pseudocode returns the order-$d$ sharing $[\![\mathbf{s}]\!]$ of the secret $s$ as the secret key sk and a verification key comprising the matrix **A** and the vector **t**. As shown in Figure 1, both the signing key sk and the verification key vk are known to the signing device 1, while only the verification key vk is known to the verifying device.

As all the operations set out above for key generation may be performed in time $O(d)$, the key generation may occur in time $O(d)$. However, as discussed above, in order to claim strong security guarantees, alternative Refresh gadgets may be utilised which would increase the total running time to $O(diogd)$.

*Sign*

The manner in which the message signing circuit 13 generates a signature *sig* for a message *msg* using the signing key sk may be represented by the following pseudocode.

```
Require: A masked signing key [[sk]], a message msg
Ensure: A signature sig of msg under sk
 1: [[r]] ← (R_q^ℓ)^d                          ▷ [[r]] is masked ephemeral randomness
 2: [[u]] ← A · [[r]]
 3: [[u]] ← OrderSwitch_{d→d'}([[u]])
 4: [[w]] ← ApproxRound([[u]])
 5: w ← Decode([[w]])                          ▷ w is the commitment computed by the signer
 6: c := H(w, msg)                             ▷ c is the challenge
 7: [[z]] := c · [[s]] + [[r]]
 8: z ← Decode([[z]])                          ▷ z is the response
 9: y := A · z − c · t
10: h := w − ⌊y⌋_p                             ▷ h is the hint
11: if (‖h‖_2 > B_2) or (‖h‖_∞ > B_∞) then
12:     goto Line 1                            ▷ Lines 11 and 12 perform a soundness check
13: return sig := (w, z, h)
```

In line 1, $d$ $l$-dimensional vectors are randomly sampled from the base ring $\mathcal{R}_q$ to generate an order-$d$ sharing $[\![\mathbf{r}]\!]$ of an ephemeral randomness vector **r**. Since the ephemeral randomness vector **r** is uniform in $\mathcal{R}_q^l$, the ephemeral randomness vector **r** can be generated in a masked manner securely and efficiently by sampling each share uniformly and independently.

In line 2, each of the $d$ shares $[\![\mathbf{r}]\!]$ of the ephemeral randomness vector r is multiplied by the matrix **A** to generate $d$ shares $[\![\mathbf{u}]\!]$ of a vector **u**. In line 3, the OrderSwitch gadget is applied to the vector **u** to transform the order-d sharing of **u** into an order-$d'$ sharing of **u,** where $d' \geq d$.

In line 4, the ApproxRound gadget is applied to the order-$d'$ sharing of **u** to generate an order $d'$ sharing of a vector **w.** The vector **w** is then decoded from the order-$d'$ sharing in line 5, the vector **w** being the commitment computed by the signing device.

In line 6, a challenge $c$ is generated by applying a hash function to data including the commitment **w** and the message *msg.* In line 7, an order-$d$ sharing of a vector **z,** which is the response, is generated by multiplying the order-$d$ shares of the secret **s** by the challenge $c$ and then adding the order-$d$ shares of the ephemeral randomness vector **r.** In line 8, the response vector **z** is decoded from the order-$d$ sharing computed in line 7.

In line 9, a vector **y** is calculated by multiplying the response vector **z** by the matrix **A** of the verification key vk and adding c times the vector **t** from the verification key vk.

A notable effect of the approximate rounding of the order-$d'$ sharing of the vector **u** in line 4 is that of breaking correctness because the noise introduced by that operation means that the probability that the modulo rounding $\lfloor \mathbf{y} \rceil$ is equal to the commitment **w** is negligible. To address this issue, in line 10 a hint vector **h** is generated by subtracting $\lfloor \mathbf{y} \rceil$ from **w**.

If unconstrained, the hint vector **h** may break the soundness of the signature generation. To address this, a soundness check is performed in which compliance with one or more shortness constraints are verified. In particular, in this example in line 11 involves checking that the Euclidian norm and the infinite norm of the hint vector **h** do not exceed respective bounded values $B_2$ and $B_\infty$ (although other shortness constraints could be checked). If either of the bounded values is exceeded, then at line 12 the routine reverts to line 1 and a new ephemeral randomness vector r is calculated. Otherwise, at line 13, a digital signature *sig* is returned comprising the commitment vector **w,** the response vector **z** and the hint vector **h.**

For a nominal execution of the generation of a digital signature, the infinity norm $B_\infty$ will always be less than or equal to *d.* Setting $B_2$ to $d\sqrt{nk}$ , where *n* is the order of the polynomial of the base ring $\mathcal{R}_q$, and $B_\infty$ to *d* allows the soundness check of lines 11 and 12 to be removed. However, by setting $B_2$ and $B_\infty$ to lower values will improve security but require the retention of the soundness check in lines 11 and 12.

The parameters used to generate the base ring $\mathbb{Z}_q[x]/phi$ , where *phi* is a polynomial function and the integer moduli *p, q* may be selected to achieve a desired level of security for a selected number of users and a number of shares *d*. A relationship between those parameters and the desired level of security, and the selected number of users and shares *d* can be established using, for example, analysis similar to that discussed in the article "Can Round-Optimal Lattice-Based Blind Signatures be Practical?" by Agrawal et al, available at 1565.pdf (iacr.org).

It is notable that the signature generation requires neither rejection sampling nor a correctness check, which are common in Schnorr-type lattice-based signatures. Rejection sampling is eliminated due to the use of uniform secret LWE, while the correctness check is unnecessary due to the use of the hint **h.**

As with key generation, as all operations in message signing are performed in time *O(d),* the running time for message signing is *O(d).* Again, the running time can increase to *O(dlogd)* if Refresh gadgets are applied.

*Verify*

The manner in which the message verifying circuit 15 verifies a signature *sig* for a message *msg* using the verification key vk may be represented by the following pseudocode.

```
Require: A verification key sk, a message msg, a signature sig
Ensure: accept or reject
 1: if (‖h‖₂ > B₂) or (‖h‖∞ > B∞) or (⌊Az − ct⌉ₚ + h ≠ w) then
 2:     reject
 3: else
 4:     accept
```

As shown in line 1, three checks are performed. The first and second checks are that the that the Euclidian norm and the infinite norm of the hint vector **n** do not exceed their respective bounded values $B_2$ and $B_\infty$ (although as discussed above in relation to checking soundness during signing, checks based on other shortness constraints could be performed). The third check involves recreating the challenge c by applying a hash function to the data comprising the commitment vector **w** and the received message *msg* in the same manner as in line 6 of the message signing pseudocode, and then checking whether the difference between the commitment vector **w** and the hint vector **h** is equal to the modulo p rounding of the vector formed by multiplying the response vector **z** from the digital signature *sig* by the matrix **A** of the verification key vk and then adding c times the vector **t** from the verification key vk. If any of the three checks fails, then verification is rejected. Otherwise, verification is accepted.

*Device*

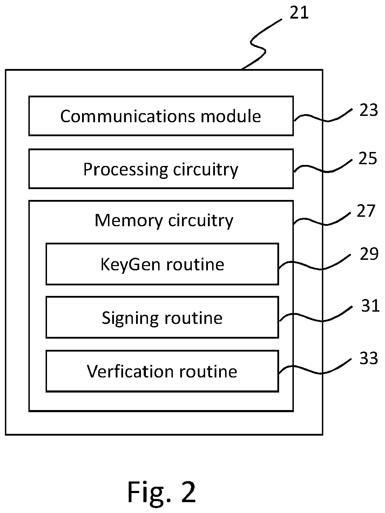

Figure 2 shows schematically the main components of a device 21 that can be used to implement the digital signature scheme described above. The device 21 includes a communications module 23 for wired or wireless communication with other devices participating in the digital signature scheme. The communications module 23 may for example include one or more antennae for communications via a core network and a radio access network, in the case of a mobile communications device such as a smartphone.

The device 21 further includes processing circuitry 25 and memory circuitry 27. The processing circuitry 25 may include one or more processing units such as a central processing unit (CPU), specialist processing units such as a digital signal processor (DSP), a subscriber identity module (SIM), a hardware-integrated trusted execution environment (TEE), and/or one or more application-specific integrated circuits (ASICs) or application-specific standard products (ASSPs). The memory circuitry 27 may include volatile random-access memory (RAM), in particular static random-access memory (SRAM) and dynamic random-access memory (DRAM), along with nonvolatile memory and storage such as flash memory, an integrated solid state drive (SSD), and integral hard disk drive (HDD), and/or one or more removable storage devices.

The memory circuitry 27 holds machine-readable instructions for implementing various functions described in the present disclosure. In particular, the memory circuitry 27 stores a KeyGen routine 29 for generating a public/private key pair as described above, a Signing routine 31 for signing a message as described above and a Verification routine 33 for verifying a digital signature to validate a message as described above.

It will be appreciated that a device for use with the described digital signature scheme need not store all of the KeyGen routine 29, the Signing routine 31 and the Verification routine 33. For example, one device may store the KeyGen routine 29 and the Signing routine 31, while another device may store only the Verification routine 33.

*Modifications*

The sampling of the secret shares during key generation and the random shares during signing in the pseudocode presented above is unconstrained. In other words, the pseudocode implements uniform secret LWE. Alternatively, small secret LWE could be utilised in which:

- during key generation, a representation of **s** can be generated bit-by-bit, followed by a Boolean-to-arithmetic conversion, which can be performed in time $O(d^2)$ when the masked value to convert is a single bit (see for example the article entitled "High-order table-based conversion algorithms and masking lattice-based encryption" by Coron et al, Cryptology ePrint Archive, Report 2021/1314);

- during signing, each of the random shares [r] may be sampled uniformly in $\{x \in \mathcal{R}_q^1 : \| x \|_\infty \leq B\}$, ensuring that $\| r \|_\infty \leq dB$, which provides meaningful security guarantees at time $O(d)$; and

- during verification, a check may be performed that **z** is short.

A downside of using small secret LWE as set out above is therefore that key generation occurs at $O(d^2)$, but the signing time remains quasilinear.

While the pseudocode set out above employs modulo p rounding to the nearest integer, alternatively modulo *p* truncating functions (which divide co-efficients by *p* and rounds the resultant floating point values to their integer components) or modulo p ceiling functions (which divide co-efficients by p and round the resultant floating point values to the next-highest integer value in magnitude) could be employed to convert a floating point value to an integer value, and the phrase "rounding at modulo *p*" encompasses all such operations.

A person skilled in the art will appreciate that when setting the moduli *p* and *q* there is a requirement to consider constraints both on security and correctness. It is common in lattice-based cryptography that two opposite constraints exist on the modulus q: the need to avoid leaking information through the verification key favours a small *q* while improving security against forgeries favours large *q*. Accordingly, *q* should not be too small or too large. Similarly, *p* should not be too small or too large as while increasing *p* reduces security, reducing *p* increases the size of the hint.

In the pseudocode, the verifier key includes the matrix **A**. Alternatively, the matrix **A** could be generated from a short publicly known seed value and a pseudorandom function, in which case the seed value is usually easier to store and send than the matrix **A.**

While the digital signature in the system described above includes the commitment, it will be appreciated that the commitment could be replaced by the challenge. In such a case, the third check of the message verifying involves confirming that

$$H(\lfloor \mathbf{Az} - c\mathbf{t} \rceil + \mathbf{h}, msg) = c.$$

It will be appreciated that, in an analogous fashion to a five pass, or more generally 2n+1 pass where n is an integer, identification scheme, more than one set of challenge data may be utilised.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A computer-implemented method for generating a Fiat-Shamir digital signature in accordance with a signing key and a verification key, the signing key corresponding to a plurality of secret shares of a secret where each secret share is sampled from a modulo q base ring and the verification key corresponding to a public matrix sampled from the modulo q base ring and solution data, the method comprising:

   generating a plurality of random shares, each random share being generated by sampling a plurality of parameters from the modulo q base ring;
   for each random share, determining the product of the random share and the public matrix to generate a plurality of modified random shares;
   rounding each of the modified random shares at modulo $p$, where $p \neq q$, to generate a plurality of rounded random shares, and decoding the plurality of rounded random shares to generate commitment data;
   applying a Hash function to data comprising the message and the commitment data to generate challenge value c;
   generating a plurality of response shares, the generation of each response share comprising multiplying a respective secret share by the challenge value c and adding a respective random share;
   decoding the plurality of response shares to generate response data;
   determining test data by determining the difference between the product of the response data and the public matrix and the product of the challenge value c and the solution data;
   determining hint data by modulo p rounding the test data to generate rounded test data and determining the difference between the response data and the rounded test vector; and
   returning a digital signature comprising the response data and the hint data.

2. The computer-implemented method of claim 1, wherein the random sampling is uniform.

3. The computer-implemented method of claim 1 or claim 2, wherein rounding each of the modified random shares at modulo $p$ comprises dividing co-efficient values of the modified random shares by $p$ and rounding to the nearest integer value.

4. The computer implemented method of any preceding claim, further comprising checking one or more shortness constraints for the hint data, for example checking that the Euclidean norm does not exceed a bounded value and/or the infinite norm does not exceed a bounded value.

5. The computer-implemented method of any preceding claim, further comprising switching the order of the plurality of modified random shares before rounding each of the modified random shares at modulo $p$.

6. The computer-implemented method of any preceding claim, further comprising refreshing at least one of i) the plurality of random shares, ii) the plurality of modified random shares, iii) the plurality of rounded random shares and iv) the plurality of response shares.

7. The computer-implemented method of any preceding claim, wherein the verification key comprises a seed value enabling generation of the public matrix, and/or wherein the solution data, the random shares and the test data comprise vectors, and/or wherein the digital signature comprises the commitment data.

8. A computer-implemented method for generating a signature keypair for a Fiat-Shamir digital signature, the method comprising:

   generating a public matrix;
   generating a plurality of secret shares, each secret share being generated by randomly sampling a plurality of parameters from a modulo q base ring;

multiplying each of the plurality of secret shares by the public matrix **A** to generate a plurality of multiplied secret shares;

rounding each of the multiplied secret shares at modulo p to generate a plurality of rounded shares, and decoding the plurality of rounded shares to generate solution data; and

returning a signing key corresponding to the plurality of secret shares and a verification key corresponding to the public matrix **A** and the solution data.

9. The computer-implemented method of claim 8, wherein generating the public matrix comprises randomly sampling the modulo q base ring.

10. The computer-implemented method of claim 8 or claim 9, wherein the random sampling is uniform.

11. The computer-implemented method of any of claims 8 to 10, wherein rounding each of the multiplied random shares at modulo $p$ comprises dividing co-efficient values of the modified random shares by $p$ and rounding to the nearest integer value.

12. The computer-implemented method of any of claims 8 to 11, further comprising switching the order of the plurality of modified random shares before rounding each of the modified random shares at modulo $p$.

13. A computer-implemented method of verifying a message using an associated Fiat-Shamir digital signature comprising response data and hint data and generated in accordance with a signing key and a verification key, the signing key corresponding to a plurality of secret shares of a secret where each secret share is sampled from a modulo q base ring and the verification key corresponds to a public matrix sampled from the modulo q base ring and solution data derived using the public matrix and the plurality of secret shares, the method comprising:

applying a Hash function to data comprising the message and commitment data to generate challenge value c;
calculating the difference between the product of the response data and the public matrix and the product of the challenge value c and the solution data to provide test data;
rounding the test data at modulo p to provide rounded test data; and
verifying that the sum of the rounded test data and the hint data corresponds to the commitment data.

14. A data processing apparatus adapted to perform a method as claimed in any preceding claim.

15. A computer program product comprising instructions which, when the program is executed by a computer, cause the computer to carry out the method of any of claims 1 to 13.

**Patentansprüche**

1. Computerimplementiertes Verfahren zum Erzeugen einer Fiat-Shamir-Digitalsignatur gemäß einem Signaturschlüssel und einem Verifizierungsschlüssel, wobei der Signaturschlüssel einer Vielzahl von geheimen Anteilen eines Geheimcodes entspricht, wobei jeder geheime Anteil aus einem Modulo-q-Basisring abgefragt wird, und der Verifizierungsschlüssel, der einer öffentlichen Matrix entspricht, aus dem Modulo-q-Basisring und Lösungsdaten abgefragt wird, das Verfahren umfassend:

Erzeugen einer Vielzahl von Zufallsanteilen, wobei jeder Zufallsanteil durch Abfragen einer Vielzahl von Parametern aus dem Modulo-q-Basisring erzeugt wird;
für jeden Zufallsanteil, Bestimmen des Produkts aus dem Zufallsanteil und der öffentlichen Matrix, um eine Vielzahl von modifizierten Zufallsanteilen zu erzeugen;
Runden jedes der modifizierten Zufallsanteile bei Modulo-p, wobei $p \neq q,$ um eine Vielzahl von gerundeten Zufallsanteilen zu erzeugen, und Dekodieren der Vielzahl von gerundeten Zufallsanteilen, um Festschreibungsdaten zu erzeugen;
Anwenden einer Hash-Funktion auf die Daten, umfassend die Nachricht und die Festschreibungsdaten, um einen Challenge-Wert c zu erzeugen;
Erzeugen einer Vielzahl von Antwortanteilen, das Erzeugen jedes Antwortanteils umfassend Multiplizieren eines jeweiligen geheimen Anteils mit dem Challenge-Wert c und Hinzufügen eines entsprechenden Zufallsanteils;
Dekodieren der Vielzahl von Antwortanteilen, um Antwortdaten zu erzeugen;
Bestimmen der Testdaten durch Bestimmen der Differenz zwischen dem Produkt der Antwortdaten und der öffentlichen Matrix und dem Produkt des Challenge-Wertes c und der Lösungsdaten;
Bestimmen von Hinweisdaten durch Modulo-p-Rundung der Testdaten, um gerundete Testdaten zu erzeugen, und Bestimmen der Differenz zwischen den Antwortdaten und dem gerundeten Testvektor; und
Zurückgeben einer Digitalsignatur, umfassend die Antwortdaten und die Hinweisdaten.

2. Computerimplementiertes Verfahren nach Anspruch 1, wobei das zufällige Abfragen gleichmäßig erfolgt.

3. Computerimplementiertes Verfahren nach Anspruch 1 oder 2, wobei das Runden jedes der modifizierten Zufallsanteile bei Modulo p ein Dividieren der Koeffizientenwerte der modifizierten Zufallsanteile durch p und Runden auf den nächsten ganzzahligen Wert umfasst.

4. Computerimplementiertes Verfahren nach einem der vorstehenden Ansprüche, ferner umfassend ein Prüfen einer oder mehrerer Kürzebeschränkungen für die Hinweisdaten, beispielsweise Prüfen, dass die euklidische Norm einen beschränkten Wert nicht überschreitet und/oder die unendliche Norm einen begrenzten Wert nicht überschreitet.

5. Computerimplementiertes Verfahren nach einem der vorstehenden Ansprüche, ferner umfassend ein Umschalten der Reihenfolge der Vielzahl von modifizierten Zufallsanteilen vor dem Runden jedes der modifizierten Zufallsanteile bei Modulo p.

6. Computerimplementiertes Verfahren nach einem der vorstehenden Ansprüche, ferner umfassend das Aktualisieren von mindestens einem von i) die Vielzahl von Zufallsanteilen, ii) der Vielzahl von modifizierten Zufallsanteilen, iii) der Vielzahl von gerundeten Zufallsanteilen und iv) der Vielzahl von Antwortanteilen.

7. Computerimplementiertes Verfahren nach einem der vorstehenden Ansprüche, wobei der Verifizierungsschlüssel einen Startwert umfasst, der die Erzeugung der öffentlichen Matrix ermöglicht, und/oder wobei die Lösungsdaten, die Zufallsanteile und die Testdaten Vektoren umfassen, und/oder wobei die digitale Signatur die Festschreibungsdaten umfasst.

8. Computerimplementiertes Verfahren zum Erzeugen eines Signaturschlüsselpaars für eine Fiat-Shamir-Digitalsignatur, das Verfahren umfassend:

Erzeugen einer öffentlichen Matrix;
Erzeugen einer Vielzahl von geheimen Anteilen, wobei jeder geheime Anteil durch zufälliges Abfragen einer Vielzahl von Parametern aus einem Modulo-q-Basisring erzeugt wird;
Multiplizieren jedes der Vielzahl von geheimen Anteilen mit der öffentlichen Matrix **A,** um eine Vielzahl von multiplizierten geheimen Anteilen zu erzeugen;
Runden jedes der multiplizierten geheimen Anteile mit Modulo p, um eine Vielzahl von gerundeten Anteilen zu erzeugen, und Dekodieren der Vielzahl von gerundeten Anteilen, um Lösungsdaten zu erzeugen; und
Zurückgeben eines Signaturschlüssels, der der Vielzahl von geheimen Anteilen entspricht, und eines Verifizierungsschlüssels, der der öffentlichen Matrix **A** und den Lösungsdaten entspricht.

9. Computerimplementiertes Verfahren nach Anspruch 8, wobei das Erzeugen der öffentlichen Matrix das zufällige Abfragen des Modulo-q-Basisrings umfasst.

10. Computerimplementiertes Verfahren nach Anspruch 8 oder 9, wobei das zufällige Abfragen gleichmäßig erfolgt.

11. Computerimplementiertes Verfahren nach einem der Ansprüche 8 bis 10, wobei das Runden jedes der multiplizierten Zufallsanteile bei Modulo p das Dividieren der Koeffizientenwerte der multiplizierten Zufallsanteile durch p und Runden auf den nächsten ganzzahligen Wert umfasst.

12. Computerimplementiertes Verfahren nach einem der Ansprüche 8 bis 11, ferner umfassend das Umschalten der Reihenfolge der Vielzahl von modifizierten Zufallsanteilen vor dem Runden jedes der modifizierten Zufallsanteile bei Modulo $p$ umfasst.

13. Computerimplementiertes Verfahren zum Verifizieren einer Nachricht unter Verwendung einer zugehörigen Fiat-Shamir-Digitalsignatur, umfassend Antwortdaten und Hinweisdaten und die gemäß einem Signaturschlüssel und einem Verifizierungsschlüssel generiert werden, wobei der Signaturschlüssel einer Vielzahl von geheimen Anteilen eines Geheimcodes entspricht, wobei jeder geheime Anteil aus einem Modulo-$q$-Basisring abgerufen wird, und der Verifizierungsschlüssel einer öffentlichen Matrix entspricht, die aus dem Modulo-$q$-Basisring und den Lösungsdaten, die unter Verwendung der öffentlichen Matrix und der Vielzahl von geheimen Anteilen abgeleitet werden, abgerufen wird, das Verfahren umfassend:

Anwenden einer Hash-Funktion auf die Daten, umfassend die Nachricht und die Festschreibungsdaten, um einen Challenge-Wert $c$ zu erzeugen;

Berechnen der Differenz zwischen dem Produkt der Antwortdaten und der öffentlichen Matrix und dem Produkt des Challenge-Werts c und der Lösungsdaten, um Testdaten bereitzustellen;

Runden der Testdaten bei Modulo p, um gerundete Testdaten bereitzustellen; und

Verifizieren, dass die Summe der gerundeten Testdaten und der Hinweisdaten den Festschreibungsdaten entspricht.

14. Datenverarbeitungseinrichtung, die geeignet ist, um ein Verfahren nach einem der vorstehenden Ansprüche durchzuführen.

15. Computerprogrammprodukt, umfassend Anweisungen, die, wenn das Programm durch einen Computer ausgeführt wird, den Computer veranlassen, das Verfahren nach einem der Ansprüche 1 bis 13 vorzunehmen.

**Revendications**

1. Procédé mis en oeuvre par ordinateur pour générer une signature numérique Fiat-Shamir conformément à une clé de signature et à une clé de vérification, la clé de signature correspondant à une pluralité de parts secrètes d'un secret où chaque part secrète est échantillonnée à partir d'un anneau de base modulo q et la clé de vérification correspondant à une matrice publique échantillonnée à partir de l'anneau de base modulo q et des données de solution, le procédé comprenant :

la génération d'une pluralité de parts aléatoires, chaque part aléatoire étant générée par l'échantillonnage d'une pluralité de paramètres de l'anneau de base modulo $q$ ;

pour chaque part aléatoire, la détermination du produit de la part aléatoire et de la matrice publique afin de générer une pluralité de parts aléatoires modifiées ;

l'arrondissement de chacune des parts aléatoires modifiées au niveau du modulo $p$, où $p \neq q$, pour générer une pluralité de parts aléatoires arrondies, et le décodage de la pluralité de parts aléatoires arrondies pour générer des données d'engagement ;

l'application d'une fonction de hachage à des données comprenant le message et les données d'engagement pour générer la valeur de défi $c$ ;

la génération d'une pluralité de parts de réponse, la génération de chaque part de réponse comprenant la multiplication d'une part secrète respective par la valeur de défi $c$ et l'ajout d'une part aléatoire respective ;

le décodage de la pluralité de parts de réponse pour générer des données de réponse ;

la détermination de données d'essai en déterminant la différence entre le produit des données de réponse et de la matrice publique et le produit de la valeur de défi c et des données de solution ;

la détermination de données d'indice en arrondissant par modulo p les données d'essai pour générer des données d'essai arrondies et la détermination de la différence entre les données de réponse et le vecteur d'essai arrondi ; et

le renvoi d'une signature numérique comprenant les données de réponse et les données d'indice.

2. Procédé mis en oeuvre par ordinateur selon la revendication 1, dans lequel l'échantillonnage aléatoire est uniforme.

3. Procédé mis en oeuvre par ordinateur selon la revendication 1 ou la revendication 2, dans lequel l'arrondissement de chacune des parts aléatoires modifiées à modulo p comprend la division de valeurs de coefficients des parts aléatoires modifiées par p et l'arrondissement à la valeur entière la plus proche.

4. Procédé mis en oeuvre par ordinateur selon l'une quelconque revendication précédente, comprenant en outre la vérification d'une ou plusieurs contraintes de brièveté pour les données d'indice, par exemple la vérification que la norme euclidienne ne dépasse pas une valeur limitée et/ou que la norme infinie ne dépasse pas une valeur limitée.

5. Procédé mis en oeuvre par ordinateur selon l'une quelconque revendication précédente, comprenant en outre l'inversion de l'ordre de la pluralité de parts aléatoires modifiées avant d'arrondir chacune des parts aléatoires modifiées à modulo p.

6. Procédé mis en oeuvre par ordinateur selon l'une quelconque revendication précédente, comprenant en outre le rafraîchissement d'au moins l'une parmi i) la pluralité de parts aléatoires, ii) la pluralité de parts aléatoires modifiées, iii) la pluralité de parts aléatoires arrondies et iv) la pluralité de parts de réponse.

7. Procédé mis en oeuvre par ordinateur selon l'une quelconque revendication précédente, dans lequel la clé de vérification comprend une valeur de départ permettant la génération de la matrice publique, et/ou dans lequel les données de solution, les parts aléatoires et les données d'essai comprennent des vecteurs, et/ou dans lequel la signature numérique comprend les données d'engagement.

8. Procédé mis en oeuvre par ordinateur pour générer une paire de clés de signature pour une signature numérique Fiat-Shamir, le procédé comprenant :

   la création d'une matrice publique ;
   la génération d'une pluralité de parts secrètes, chaque part secrète étant générée par l'échantillonnage aléatoire d'une pluralité de paramètres à partir d'un anneau de base modulo q ;
   la multiplication de chacune des parts secrètes par la matrice publique A pour générer une pluralité de parts secrètes multipliées ;
   l'arrondissement de chacune des parts secrètes multipliées à modulo p pour générer une pluralité de parts arrondies, et le décodage de la pluralité de parts arrondies pour générer des données de solution ; et
   le renvoi d'une clé de signature correspondant à la pluralité de parts secrètes et une clé de vérification correspondant à la matrice publique **A** et aux données de solution.

9. Procédé mis en oeuvre par ordinateur selon la revendication 8, dans lequel la génération de la matrice publique comprend l'échantillonnage aléatoire de l'anneau de base modulo q.

10. Procédé mis en oeuvre par ordinateur selon la revendication 8 ou la revendication 9, dans lequel l'échantillonnage aléatoire est uniforme.

11. Procédé mis en oeuvre par ordinateur selon l'une quelconque des revendications 8 à 10, dans lequel l'arrondissement de chacune des parts aléatoires multipliées à modulo p comprend la division de valeurs de coefficients des parts aléatoires modifiées par p et l'arrondissement à la valeur entière la plus proche.

12. Procédé mis en oeuvre par ordinateur selon l'une quelconque des revendications 8 à 11, comprenant en outre l'inversion de l'ordre de la pluralité de parts aléatoires modifiées avant d'arrondir chacune des parts aléatoires modifiées à modulo p.

13. Procédé mis en oeuvre par ordinateur de vérification d'un message à l'aide d'une signature numérique Fiat-Shamir associée comprenant des données de réponse et des données d'indice et générée conformément à une clé de signature et à une clé de vérification, la clé de signature correspondant à une pluralité de parts secrètes d'un secret où chaque part secrète est échantillonnée à partir d'un anneau de base modulo q et la clé de vérification correspond à une matrice publique échantillonnée à partir de l'anneau de base modulo q et à des données de solution dérivées à l'aide de la matrice publique et de la pluralité de parts secrètes, le procédé comprenant :

   l'application d'une fonction de hachage à des données comprenant le message et les données d'engagement pour générer la valeur de défi c ;
   le calcul de la différence entre le produit des données de réponse et de la matrice publique et le produit de la valeur de défi c et des données de solution pour fournir des données d'essai;
   l'arrondissement des données d'essai à modulo p pour fournir des données d'essai arrondies ; et
   la vérification que la somme des données d'essai arrondies et des données d'indice correspond aux données d'engagement.

14. Appareil de traitement de données adapté à la réalisation d'un procédé tel que revendiqué selon l'une quelconque revendication précédente.

15. Produit programme d'ordinateur comprenant des instructions, qui, lorsque le programme est exécuté par un ordinateur, amènent l'ordinateur à réaliser le procédé selon l'une quelconque des revendications 1 à 13.

Key Generation — 11

Message Signing — 1

Signer Device — 13

msg

sk,vk

(sig,msg)

Communication Channel — 5

(sig,msg)

vk

Message Verifying — 3

Verifier Device — 15

msg

Verify - ✓/✗

**FIG. 1**

21

| Communications module | 23 |
| Processing circuitry | 25 |
| Memory circuitry | 27 |
| KeyGen routine | 29 |
| Signing routine | 31 |
| Verfication routine | 33 |

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Provably secure higher-order masking of AES. **RIVAIN ; PROUFF.** CHES 2010. Springer, August 2010, vol. 6225, 413-427
- Horizontal side-channel attacks and countermeasures on the ISW masking scheme. **BATTISTELLO et al.** CHES 2016. Springer, August 2016, vol. 9813, 23-39

- **AGRAWAL et al.** *Can Round-Optimal Lattice-Based Blind Signatures be Practical?*
- **CORON et al.** High-order table-based conversion algorithms and masking lattice-based encryption. *Cryptology ePrint Archive*